# EUROPÄISCHE PATENTANMELDUNG

(11) **EP 2 112 070 A2**
(43) Veröffentlichungstag der Anmeldung: **28.10.2009**
(21) Anmeldenummer: 09005526.0
(22) Anmeldetag: 20.04.2009
(51) Int. Cl.: B65B 31/02

(54) **Anstellvorrichtung für ein Werkzeug**

(30) Priorität: 22.04.2008 DE 102008020234
(71) Anmelder: Ulma Packaging Technological Center, S.Coop., 20560 Oñati, Guipuzcoa (ES)
(72) Erfinder: Biechteler, Alexander, 87724 Ottobeuren (DE)
(74) Vertreter: Schulz, Manfred

(57) **Zusammenfassung**

Die Erfindung betrifft eine Anstellvorrichtung für das Bewegen eines Werkzeuges. Die Anstellvorrichtung umfasst ein einseitig offenes Gehäuse (2), das von einer axial verschiebbar gelagerten Trägerplatte (3) komplettierbar ist. Hierdurch ist ein mit Druckmittel beaufschlagbarer Raum (9) definiert. Die Trägerplatte (3) trägt das Werkzeug (4). Zwischen der Trägerplatte (3) und dem Gehäuse (2) ist eine Dichtung (5) zum Abdichten des Spaltes (12) vorgesehen.

## Beschreibung

Die Erfindung betrifft eine Anstellvorrichtung für das Bewegen eines Werkzeuges, insbesondere zum Bewegen beziehungsweise Betätigen eines Siegelwerkzeuges in einer Siegelvorrichtung.

In bekannten Siegelwerkzeugen umfasst das Werkzeugoberteil eine vorzugsweise rechteckig ausgebildete Trägerplatte mit der eine Siegelplatte lösbar verbunden ist. Beide Platten sind in Richtung der Siegelebene bewegbar. Hierzu sind zum Beispiel separate Pneumatikzylinder oder Hebesysteme bekannt.

Ebenso wird das Werkzeugunterteil, in dem die mit Packgut gefüllten muldenförmigen Verpackungen aufgenommen sind, zum Zwecke des Versiegelns mit einer Verschlussfolie vertikal in die Siegelebene bewegt, um ein Widerlager für das Werkzeugoberteil zu bilden. Gegebenenfalls wird dadurch auch ein abgeschlossener, die Verpackung aufnehmender Raum geschaffen, der, bevor die Verschlussfolie aufgesiegelt wird, evakuiert wird, um der Verpackung Luft zu entnehmen, welche die Konservierung des verpackten Gutes beeinträchtigen könnte.

Um den Siegelvorgang ausführen zu können, steht das Werkzeugoberteil mit einem Antrieb in Verbindung, der wenigstens die Trägerplatte, zusammen mit der Siegeplatte, aus einer Endposition alternierend in die Siegelebene und zurück in die Endposition bewegt.

Ausgehend von diesem Stand der Technik ist es Aufgabe der Erfindung, eine Anordnung zur Verfügung zu stellen, die einfacher zu realisieren ist.

Gelöst wird diese Aufgabe durch eine Anstellvorrichtung, wie eingangs beschrieben, wobei vorgeschlagen wird, dass die Anstellvorrichtung ein einseitig offenes Gehäuse umfasst, das Gehäuse von einer axial verschiebbar gelagerten Trägerplatte komplettierbar ist und das Gehäuse mit der Trägerplatte einen mit Druckmittel beaufschlagbaren Raum definiert und die Trägerplatte das Werkzeug trägt und entweder an der Trägerplatte oder dem Gehäuse eine Dichtung zum Abdichten des Spaltes zwischen Trägerplatte und Gehäuse angeordnet ist.

Auf die Anordnung einer von der Trägerplatte räumlich beabstandeten Anstellvorrichtung, die zum Beispiel als Pneumatikzylinder realisiert ist und entsprechend Bauraum benötigt, wird nach der Erfindung verzichtet. Es wird vielmehr ein Direktantrieb realisiert, der zum einen kostengünstig realisierbar, aber auch platzsparend ausführbar ist.

Des Weiteren schlägt die Erfindung letztendlich eine geringere Anzahl von einzelnen Bauteilen vor, die auch in einfacher Weise demontierbar sind, was insbesondere das Reinigen der gesamten Anstellvorrichtung beziehungsweise des Siegelwerkzeuges erheblich erleichtert und dadurch die hygienischen Eigenschaften einer entsprechend ausgestatteten Verpackungsmaschine oder anderer entsprechend ausgestatteter Maschinen erheblich verbessert.

Die Ausgestaltung der einzelnen Bauteile ist verhältnismäßig einfach und unkompliziert, was ebenfalls eine kostengünstige Fertigung ermöglicht.

Die Anstellvorrichtung ist im Prinzip derart ausbildbar, dass das gesamte Gehäuse dem Werkzeugoberteil, zum Beispiel dem Siegeloberteil entspricht und somit eine verhältnismäßig große Fläche an der Trägerplatte zur Verfügung steht. Es resultiert hieraus eine relativ große, mit Druck beaufschlagbare Fläche der Trägerplatte, wobei bereits ein relativ geringer Druck einer Druckquelle ausreicht, um eine hinreichend große Kraft bei homogener Druckverteilung während der Anwendung der Anstellvorrichtung zu erreichen. Dies ist insbesondere bei dem Einsatz der Erfindung in einem Siegelwerkzeug von Vorteil.

Erfindungsgemäß wird vorgeschlagen, dass die Trägerplatte axial verschiebbar gelagert ist. Das bedeutet, dass die Trägerplatte bevorzugt entlang einer Raumachse beweglich ist.

Nach der Erfindung ist es möglich, dass das Werkzeug einstückig mit der Trägerplatte ausgebildet ist. Da für Reinigungszwecke sowieso bereits eine Entnahme der Trägerplatte vorgesehen ist, um das Gehäuseinnere vollständig reinigen zu können, ist es erfindungsgemäß vorgesehen, dass mit der gleichen Demontagetechnik auch das Werkzeug gewechselt wird.

Alternativ hierzu ist es vorgesehen, dass die Trägerplatte eine entsprechende Aufnahme für das Werkzeug aufweist, also zum Beispiel in Art einer Schnellspann- oder Schnellbefestigungsvorrichtung und so einen Austausch des Werkzeuges erlaubt.

Die Erfindung wird beispielhaft im Zusammenhang mit der Bewegung eines Werkzeuges, zum Beispiel eines Siegelwerkzeuges in einer Siegelvorrichtung einer Verpackungsmaschine nachfolgend beschrieben. Hierauf ist die Erfindung aber in keinster Weise beschränkt, die erfindungsgemäße Anstellvorrichtung dient als Antrieb mit geringem Hub aber großer Kraftentfaltung, insbesondere für großflächige Anwendungen in einem weiten Anwendungsbereich, ohne dabei die Erfindung auf einen speziellen Anwendungsfall einer Verpackungsmaschine beschränken zu wollen. Wenn daher nachfolgend von dem Anwendungsfall einer Verpackungsmaschine gesprochen wird, so lässt dies die vorliegende Erfindung in keinster Weise hierauf beschränken, sondern soll beispielhaft verstanden sein. Dabei ist auch vorgesehen, dass die Trägerplatte selber als Werkzeug, zum Beispiel bei entsprechenden Pressaufgaben eingesetzt wird, das heißt die Trägerplatte muss nicht zwingend ein Werkzeug separat tragen, sondern ist in verschiedenen Anwendungsfällen auch selber als Werkzeug vorgesehen.

In einer bevorzugten Variante der Erfindung ist vorgesehen, dass die Dichtung als Stoßdichtung ausgebildet ist, die durch Ablängen einer Meterdichtware gewonnen wurde. Dieser erfindungsgemäße Vorschlag ergibt überraschende Vorteile.

Zunächst ist gefunden worden, dass, obwohl die erfindungsgemäß vorgeschlagene Stoßdichtung ja zwei Stoßflächen besitzt, eine ausreichend dichte Anordnung realisierbar ist. Hieraus folgt, dass die Dichtung für die erfindungsgemäße Anstellvorrichtung jeweils auf das betreffende Maß der Trägerplatte konfektionierbar ist und daher äußerst flexibel an die jeweilige Ausgestaltung der Anstellvorrichtung anpassbar ist. Die sonst in dem Stand der Technik bekannten Endlosdichtungen, zum Beispiel Ringdichtungen und so weiter, sind zwar ohne entsprechende Stoßflächen ausgestattet, aber äußerst unflexibel, da sie nur eine entsprechende Trägerplattenform- oder -maß abzudichten vermögen. Des Weiteren wird hierdurch nur ein ausreichender Vorrat einer als Meterdichtware vorliegenden Dichtung benötigt, ein großes, ansonsten vorzuhaltendes Teilelager wird durch diesen erfindungsgemäßen Vorschlag vermieden, eine solche Anordnung ist daher entsprechend kostengünstig. Der erfindungsgemäße Vorschlag kombiniert daher eine hohe Flexibilität der Einsetzbarkeit der Dichtung mit geringen Vorhaltekosten.

Anstelle von einer als Stoßdichtung ausgebildeten Dichtung umfasst die Erfindung aber auch eine Lösung, bei welcher eine Endlosdichtung, zum Beispiel eine Ringdichtung und so weiter eingesetzt wird. Auch mit einer solchen Variante werden insbesondere bei der erfindungsgemäßen Anstellvorrichtung die eingangs geschilderten Vorteile erreicht. Die Erfindung umfasst daher beide Varianten, die Lösung mit einer Stoßdichtung sowie die Lösung mit einer Endlosdichtung.

Erfindungsgemäß ist vorgesehen, dass die Dichtung entweder an der Trägerplatte (wie das auch später in der Zeichnung gezeigt wird) oder in dem Gehäuse angeordnet ist und zum Abdichten des Spaltes zwischen Trägerplatte und Gehäuse dient. Natürlich ist auch die als Stoßdichtung ausgebildete Dichtung gemäß der Erfindung in den beiden vorgenannten Varianten entsprechend einsetzbar.

Es ist ein wesentlicher Vorteil dieser erfindungsgemäßen Variante, dass durch den Vorschlag jede Größe von Anstellvorrichtungen beziehungsweise Gehäusen mit einer funktionierenden Dichtung ausstattbar ist. Die Anordnung ist auf die jeweiligen Fälle problemlos anpassbar.

In einer bevorzugten Variante der Erfindung ist vorgesehen, dass zumindest der Umfang der Trägerplatte und/oder der Umfang des Werkzeuges und dementsprechend auch das Innere des Gehäuses vorzugsweise die Form eines Rechteckes ausbilden. Durch den erfindungsgemäßen Vorschlag wird eine andere Ausgestaltung des Gehäuses beziehungsweise der Trägerplatte oder des Werkzeuges nicht ausgeschlossen, die Form der Trägerplatte beziehungsweise des Werkzeuges orientiert sich natürlich insbesondere an der herzustellenden Verpackung oder dem Anwendungszweck der erfindungsgemäßen Anstellvorrichtung.

Geschickterweise ist in einer weiteren erfindungsgemäßen Alternative vorgesehen, dass wenigstens die Eckbereiche der Trägerplatte und die des Gehäuseinneren einen hinreichend großen Radius aufweisen. Da die Dichtung durch Ablängen von einer Meterdichtware gewonnen wird, ist es natürlich vorgesehen, dass die Dichtung auch entsprechenden Rundungen an der Trägerplatte beziehungsweise dem Gehäuse zu folgen vermag. Hierzu sind entsprechende minimale Radien an der Trägerplatte vorgesehen, die die Dichtung nicht übermäßig durch die Abwinkelung strapazieren. Der konkrete hinreichend große Radius bestimmt sich nach der jeweiligen Ausgestaltung der Dichtung.

Das Gehäuse ist nach einer erfindungsgemäßen Ausgestaltung mit einer Öffnung für einen Druckmittelanschluss ausgestattet. Wie bereits ausgeführt, reichen bereits verhältnismäßig geringe Druckdifferenzen aus, um eine ausreichende Bewegung der Trägerplatte zu erreichen. Üblicherweise ist als Druckmedium ein Gas, zum Beispiel Luft vorgesehen, anstelle dieses pneumatischen Systemes ist aber auch ein hydraulisches System in gleicher Weise erfindungsgemäß einsetzbar.

Neben dem Aufbauen eines Überdruckes in dem mit Druck beaufschlagbaren Raum, welcher durch das Gehäuse und die Trägerplatte beschränkt wird, ist es aber auch möglich in diesem Raum einen entsprechenden Unterdruck zu realisieren, und so eine Rückzugsbewegung der Trägerplatte zu ermöglichen. Durch eine solche Ausgestaltung ist ein erstes Mittel angegeben, mit welchem die Trägerplatte in dem Gehäuse zurückgestellt werden kann. Daneben sind aber erfindungsgemäß auch noch andere zurückstellende Mittel vorgesehen, die zwischen der Trägerplatte und dem Gehäuse angeordnet sind und eine Rückzugsbewegung der Trägerplatte, insbesondere wenn das System nicht mit Druck beaufschlagt ist, bewirkt.

Geschickterweise ist vorgesehen, dass die Dichtung in einer Nut der Trägerplatte oder des Gehäuses angeordnet ist. Wie bereits ausgeführt, ist es möglich, dass der erfindungsgemäße Vorschlag in zwei Varianten realisierbar ist, nämlich derart, dass die Dichtung in der Trägerplatte oder in dem Gehäuse vorgesehen ist, wobei die Verwendung einer Nut für die Dichtung eine verhältnismäßig einfache, aber auch zuverlässige Montage der Dichtung erlaubt.

Die Anordnung der Dichtung in der Trägerplatte, die sich bewegt, ist zu bevorzugen, da dadurch die Dichtung mitfahrend ausgebildet ist und die Trägerplatte daher verhältnismäßig schmal ausbildbar ist. Die Variante, bei welcher die Dichtung in der Gehäuseinnenwand angeordnet ist, führt letztendlich zu einer stillstehenden Dichtung und bedingt daher unter Umständen eine dickere Trägerplatte, da diese entlang des Verfahrweges dicht mit der Dichtung zusammenzuwirken hat. Ein hinreichendes Kriterium ist daher, dass die Dicke der Trägerplatte dann etwas größer sein muss als der geplante Verfahrweg der Trägerplatte in der Anstellvorrichtung.

Für die Ausgestaltung der Dichtung ist vorgesehen, dass diese einen Dichtungsfuß und einen Dichtungskopf besitzt, wobei der Dichtungsfuß bevorzugt in der Nut eingelegt ist, insbesondere hierin klemmend befestigt ist.

Durch eine entsprechende Dimensionierung der Nut bezüglich der Dichtung, insbesondere des Dichtungsfußes, wird ein dichtes Zusammenwirken der Dichtung mit der Nut insbesondere dann erreicht, wenn die Dichtung leicht klemmend in der Nut einzulegen ist. Des Weiteren hat das klemmende Einlegen oder Halten des Dichtungsfußes in der Nut den Vorteil, dass bei der Montage der erfindungsgemäßen Anstellvorrichtung die Dichtung nicht wieder herausfällt und stört. Hierdurch wird also die Montage der Anstellvorrichtung entsprechend erleichtert. Des Weiteren ist zu beachten, dass eine abdichtende Wirkung von der Dichtung insbesondere im Zusammenwirken entweder mit der Gehäuseinnenwand oder der Trägerplatte erwartet wird, also eine gewisse Relativbewegung aufgrund der Anstellbewegung der Trägerplatte an der Dichtung erfolgt, die zu entsprechendem Verschleiß führen kann. Die hier auftretenden Reibkräfte können unter Umständen zu einem Herausziehen der Dichtung aus der Nut führen, weswegen die Klemmkräfte beziehungsweise die Klemmwirkung geschickterweise so gewählt ist, dass eine solches Szenario nicht eintritt.

In einer bevorzugten Variante der Erfindung ist vorgesehen, dass die Dichtung im Schnitt gesehen im Wesentlichen H-förmig ausgebildet ist. Zwischen dem Dichtungskopf und dem Dichtungsfuß ist eine Einschnürung vorgesehen, die zu dieser H-artigen Ausgestaltung gegebenenfalls auch sehr variierbar ist. Die vorgesehene Einschnürung führt zu einer entsprechenden relativen Flexibilität der einzelnen Elemente der Dichtungen, insbesondere im Bereich des Dichtungskopfes oder des Dichtungsfußes.

In einer bevorzugten Variante der Erfindung ist vorgesehen, dass der Dichtungskopf wenigstens eine Dichtlippe aufweist. Oftmals sind auch mehrere Dichtlippen hintereinander angeordnet, die zu einer Labyrinthdichtung führen und so die Dichtwirkung weiter verbessern.

Als bevorzugtes Material für die Dichtung ist zum Beispiel Kautschuk-, Gummi-, Moosgummi- oder Silikonmaterial vorgesehen, natürlich sind auch entsprechende Mischungen oder andere Materialien mit entsprechenden Anteilen der vorgenannten Materialien erfindungsgemäß vorgesehen.

In einer bevorzugten Variante der Erfindung ist vorgesehen, dass der Dichtungsfuß breiter ist als der Dichtungskopf. Dadurch wird erreicht, dass der Dichtungskopf kaum oder garnicht an der Nut, in welche die Dichtung eingelegt ist, anliegt und somit auch Dichtungsbereiche des Dichtungsfußes unter dem im mit Druck beaufschlagbaren Raum herrschenden Druck stehen und somit ebenfalls durch diesen Druck fest in die Nut, insbesondere in den Nutboden gedrückt werden. Dies ist aber nicht der einzige Effekt. Da durch die Anordnung der Einschnürung beziehungsweise der erfindungsgemäß vorgesehenen H-förmigen Ausgestaltung der Dichtung auch eine gewisse Flexibilität im Dichtungskopf, hier insbesondere im Bereich der Dichtlippen besteht, wirkt dieser im Raum herrschende Druck auch auf diesen Bereich und presst diesen zusätzlich an die mit der Dichtung zusammenwirkende Wand, zum Beispiel der Gehäuseinnenwand oder, falls die Anordnung umgekehrt eingesetzt wird, an den Seitenbereich der Trägerplatte.

Hieraus ergibt sich eine sehr dichte Ausgestaltung der Dichtung, die auch gerade beim Anliegen von Druck entsprechend dicht wird.

Des Weiteren ist vorgesehen, dass die Dichtung eine größere Breite als Höhe aufweist. Die Höhe ist die Abmessung an der Dichtung, die sich von dem Dichtungskopf zum Dichtungsfuß hin erstreckt. Die Breite ist hierzu rechtwinklig orientiert. Durch eine solche Dimensionierung ergibt sich ein bevorzugtes Abwinkelverhalten der als Meterware vorgesehenen Dichtung, nämlich dass die Dichtung um eine Abwinkelachse bevorzugt abwinkelbar ist, die senkrecht zur Verbindungslinie von Dichtungfuß zu Dichtungskopf orientiert ist.

In einer bevorzugten Variante der Erfindung ist ein symmetrischer Aufbau der Dichtung vorgesehen. Eine solche Ausgestaltung macht die Anordnung unabhängig davon, wie die Dichtung in die Nut eingelegt ist. Die Verhältnisse sind jeweils gleich.

Günstigerweise ist vorgesehen, dass sich die an dem Ende der Stoßdichtung vorgesehenen Stoßflächen der in der Nut eingelegten Stoßdichtung berühren. Alternativ ist gegebenenfalls auch ein Dichtungsanschlußstück zwischen den beiden Enden vorgesehen, mit dem zum Beispiel entsprechende Maßtoleranzen oder Ungenauigkeiten ausgeglichen werden können.

Durch ein Anliegen der beiden Stoßflächen wird natürlich von selber eine entsprechende Abdichtung an den Enden der Stoßdichtung erreicht. Geschickterweise ist dabei die Anordnung so gewählt, dass die Stoßflächen parallel zueinander sind.

Geschickterweise wird in einer erfindungsgemäßen Variante die Anordnung so gewählt, dass die Stoßflächen in einem gerade verlaufenden Nutbereich angeordnet sind. Gerade das Ende der Dichtung neigt dazu, leicht aus der Nut herauszugleiten, was insbesondere im Eck- oder Rundungsbereich, wo sowieso bereits entsprechende elastische Kräfte aufgrund der Abwinkelung auf die Dichtung wirken, bevorzugt erfolgt. Die Anordnung wird daher so gewählt, dass die Dichtung im abgerundeten Bereich durchgehend ist und die Enden der Dichtung in einem geraden Bereich der Nut liegen und die Stoßflächen hier aneinander anliegen.

Die eingangs geschilderten Nachteile beziehen sich insbesondere auf eine Siegelvorrichtung zum Versiegeln von Verpackungen mittels einer Verschlussfolie, wobei die Siegelvorrichtung ein Werkzeugober- und -unterteil umfasst. Die eingangs geschilderte Erfindung wird insbesondere durch eine solche Siegelvorrichtung gelöst, wobei das Werkzeugoberteil oder das Werkzeugunterteil eine Anstellvorrichtung wie beschrieben umfasst.

In der Regel wirkt dabei ein Werkzeugteil mit einem anderen Werkzeugteil als Widerlager zusammen. Zum Beispiel ist das Werkzeugoberteil beweglich ausgebildet und als Widerlager dient dann das Werkzeugunterteil, für die Bewegung in dem Werkzeugoberteil ist dann zum Beispiel eine Anstellvorrichtung, wie beschrieben, vorgesehen. Die kinematische Umkehr gehört ausdrücklich ebenfalls zur Erfindung.

Dabei ist natürlich klar, dass eine Siegelvorrichtung nur ein Anwendungsfall einer allgemein definierten Werkzeugvorrichtung ist, und die Werkzeugvorrichtung ein Werkzeugober- oder Werkzeugunterteil, wie vorher beschrieben, umfasst.

In einer geschickten Variante dieses erfindungsgemäßen Siegelwerkzeuges wird dabei die Anordnung so gewählt, dass das Werkzeugoberteil oder das Werkzeugunterteil das Gehäuse bildet. Die konstruktiv am Siegelwerkzeug sowieso bereits vorhandenen Elemente, nämlich das Kammeroberteil wie auch die Siegelplatte werden durch diesen erfindungsgemäßen Vorschlag einer doppelten Nutzung zugeführt und daher eine sehr kompakte Bauweise erreicht, die entsprechend materialeinsparend ist. Das Werkzeugoberteil ist daher das Gehäuse der Anstellvorrichtung sowie Teil der gesamten Werkzeugvorrichtung. Natürlich ist es erfindungsgemäß in einer Alternative auch möglich, das Werkzeugunterteil als Gehäuse zu nutzen. In diesem Fall nimmt das Werkzeugunterteil die Anstellvorrichtung auf.

In dem Anwendungsfall eines Siegelwerkzeuges wird in das Werkzeug eine Siegelplatte eingesetzt, die gegebenenfalls auch beheizbar ist. Die Siegelplatte wird dabei mit geeigneten Mitteln, die hier nicht weiter von Belang sind, an der Trägerplatte befestigt.

Der Einsatz der Erfindung ist dabei auf ein Siegelwerkzeug in keinster Weise beschränkt. Die Erfindung ist auch bei anderen Werkzeugen, welche zum Beispiel zur Herstellung einer Verpackung eingesetzt werden, einsetzbar, die eine Relativbewegung oder Anstellbewegung eines Werkzeuges benötigen. Auch ist es nicht notwendig das Werkzeug zu beheizen.

Insbesondere ist in einer erfindungsgemäßen Variante vorgesehen, dass das Gehäuse U-förmig ausgebildet ist und an den offenen Enden des Gehäuses, zwischen den freien Enden der Schenkel und dem Werkzeugunterteil des Siegelwerkzeuges, die Verschlussfolie geführt ist.

Insbesondere treten bei einer Verpackungsmaschine die mit einem Siegelwerkzeug wie oben beschrieben ausgestattet ist, die Vorteile der Erfindung in beeindruckender Weise hervor. So wird durch den erfindungsgemäßen Einsatz ein kostengünstige Antriebs- beziehungsweise Anstellvorrichtung realisiert, die mit geringem Druckniveau ein verhältnismäßig hohes Kraftniveau zu realisieren vermag, die einfach zu reinigen und daher hygienisch unbedenklich ist und die mit geringen Kostenaufwand an beliebige Dimensionen der Anstellvorrichtung anpassbar ist.

Ein wesentlicher Vorzug ergibt sich insbesondere durch die spezielle Verwendung einer an ihren Endflächen je eine Stoßfläche aufweisende Stoßdichtung, die durch Ablängen einer Meterdichtware gewonnen wurde und zum Abdichten des Spaltes zwischen einer Trägerplatte und einem Gehäuse, insbesondere in einer Anstellvorrichtung wie beschrieben eingesetzt wird. Es wird dabei ausdrücklich darauf hingewiesen, dass die Trägerplatte und das Gehäuse auch zum Beispiel für andere Zwecke Verwendung finden können als für die in dieser Anmeldung beschriebene Anstellvorrichtung.

An dieser Stelle sei darauf verwiesen, dass alle Merkmale die im Zusammenhang mit der erfindungsgemäßen Verwendung der Dichtung beziehungsweise der Stoßdichtung im Zusammenhang mit dem Siegelwerkzeug, der Anstellvorrichtung oder der Verpackungsmaschine angeführt sind, natürlich sinngemäß auch zu der ebenfalls zur Erfindung zählenden Verwendung einer Stoßdichtung zählen und als mitoffenbart anzusehen sind und ebenfalls zur Erfindung gehören. Das bedeutet, alle diese Merkmale können bei Bedarf an den Verwendungsanspruch eingesetzt werden und sind Teil dieser Erfindung und Offenbarung.

In der Zeichnung ist die Erfindung beispielhaft gezeigt. Das hier gezeigte Ausführungsbeispiel beschränkt die Erfindung in keinster Weise hierauf. Es zeigen:
- Fig. 1: im Schnitt den Einsatz der erfindungsgemäßen Anstellvorrichtung zum Beispiel in einer Siegelvorrichtung gegebenenfalls ebenfalls nach der Erfindung;
- Fig. 2a: eine Vergrößerung des Details des strichpunktierten Kreises nach Fig. 1;
- Fig. 2b: in einer Detailansicht die Dichtung gemäß der Erfindung und
- Fig. 3: in einer Draufsicht die Trägerplatte mit eingesetzter Dichtung nach der Erfindung.

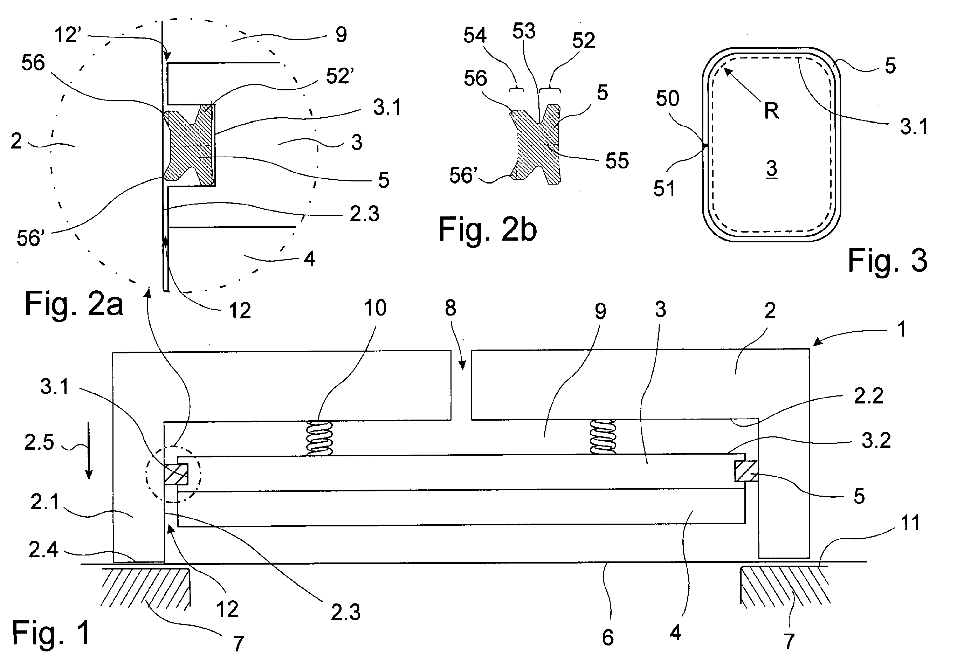

In Fig. 1 ist der Einsatz einer erfindungsgemäßen Anstellvorrichtung in einem Werkzeugoberteil 1 schematisch dargestellt. Als Werkzeugoberteil 1 wird dabei zum Beispiel ein Siegelwerkzeug zum Versiegeln einer Oberfolie auf eine mit Mulden ausgestattete Unterfolie angesehen. Die Oberfolie oder Verschlussfolie 6 ist in der Zeichnung angedeutet, die Unterfolie ist nicht gezeigt.

Das Werkzeugoberteil 1 besteht im Wesentlichen aus einem Gehäuse 2, das wie ein umgedrehter Topf ausgebildet ist. Es besitzt einen Boden 2.2 an dem sich, wie hier im Schnitt gezeigt, U-förmig nach unten die Schenkel 2.1 erstrecken. An dem unteren Rand 2.4 der Schenkel 2.1 ist die Verschlussfolie 6 entlanggeführt. Sie wird zwischen diesem Teil des Werkzeugoberteiles 1 und des Werkzeugunterteiles 7 in der Siegelebene 11 kurzzeitig festgeklemmt werden, wenn diese beiden Teile zum Versiegel zusammengefahren sind, wie dies mit dem Pfeil 2.5 für das Werkzeugoberteil 1 angedeutet ist.

In dem Gehäuse 2 ist die Trägerplatte 3 beweglich, axial verschiebbar gelagert. Die Bewegung der Trägerplatte 3 rechtwinklig zu ihrer Erstreckung oder Ausdehnung geschieht durch einen entsprechenden Überdruck in dem beaufschlagbaren Raum 9, der einerseits von dem Boden 2.2 des Gehäuses 2 sowie der sich daran rechtwinklig anschließenden Innenwand 2.3 sowie der Innenseite 3.2 der Trägerplatte 3 begrenzt ist. In dem Boden 2.2 des Gehäuses 2 ist eine Öffnung 8 vorgesehen, durch die entsprechendes Druckmedium oder auch ein Vakuum in den Raum 9 einprägbar ist. Durch die Anwendung eines Vakuums kann auch eine Rückzugsbewegung der Trägerplatte in dem hier gezeigten Ausführungsbeispiel nach oben realisiert werden. Durch das Aufbauen eines Überdruckes in dem Raum 9 erfolgt eine Bewegung der Trägerplatte 3 nach unten.

Für die Rückstellbewegung sind des Weiteren (zum Beispiel alternativ) Rückstellmittel 10 vorgesehen, diese sind zum Beispiel als Zugfedern ausgebildet und wirken der durch das Aufbauen eines Druckes im Innenraum 9 entstehenden Kraft entgegen. Als zurückstellendes Mittel sind neben dem Einsatz von Federn, die hier paarweise oder in größeren in größerer Zahl angeordnet sind, auch ein Vakuum oder andere Mittel einsetzbar.

Zwischen der Trägerplatte 3 und dem Schenkel 2.1 des Gehäuses 2 ergibt sich ein Spalt 12. Um diesem Spalt 12 möglichst effektiv und kostengünstig zu schließen, das heißt abzudichten, wird nach der Erfindung der Einsatz einer Dichtung 5 vorgesehen, die in einer Nut 3.1 teilweise eingelegt ist und mit ihrem Dichtungskopf 54 zumindest etwas aus dieser hervorsteht.

In dem hier gezeigten Ausführungsbeispiel ist die U-förmige Nut 3.1 in der Trägerplatte 3 vorgesehen. Die Nut ist am Umfang der Trägerplatte vollständig umlaufend vorgesehen, um den gesamten Randbereich mit einer Dichtung zu versehen. Es ist auch möglich eine Nut mit Hinterschneidungen und so weiter vorzusehen, um zum Beispiel durch einen Formschluss einen guten Halt mit der Dichtung zu ergeben.

Hierauf ist die Erfindung aber nicht beschränkt, es ist in gleicher Weise erfindungsgemäß möglich, in der seitlichen Innenwand 2.3 eine Dichtung 5 anzuordnen.

Wie sich aus Fig. 1 ergibt, wird mit Hilfe der sowieso an einem Siegelwerkzeug vorhandenen Elemente Werkzeugoberteil 1, Trägerplatte 3, welche die Siegelplatte oder ein Werkzeug 4 trägt, mit geringstem zusätzlichen Aufwand eine sehr effektive Verbesserung erreicht, da, ohne zusätzlichen Raum für Antriebsmittel einzusetzen, in dem sich sowieso ergebenden Raum oberhalb der Trägerplatte 3 dieser einfach als mit Druck beaufschlagbarer Raum 9 genutzt wird. Die Anordnung der Dichtung 5 in der Nut 3.1 ist dabei so gewählt, dass die Dichtung 5 als Stoßdichtung realisiert ist, die durch Ablängen von einer als Massenware produzierbaren Meterdichtware gewonnen wird und exakt auf Maß konfektioniert wird.

Dies ist zum Beispiel in Fig. 3 schematisch dargestellt. Hier ist die Trägerplatte 3 von oben gezeigt und die Nut 3.1, insbesondere deren Boden ist gestrichelt angedeutet. Die Dichtung 5 steht über der Nut hervor. Im linken Bereich, im geraden Stück, sind mit 50 und 51 die beiden Stoßflächen am Ende der Stoßdichtung 5' vorgesehen. Sie liegen aneinander an, um den sich dazwischen bildenden Spalt sicher zu verdecken.

Es ist ein Vorzug der Erfindung, dass die so ausgebildete Dichtung beziehungsweise Stoßdichtung 5 auf jede beliebige Form und auch Dimension der Trägerplatte 3 beziehungsweise auch des Werkzeuges beziehungsweise die Siegelplatte 4 anpassbar ist. Da die als Meterware vorliegende Dichtung 5 durch das Abwinkeln entsprechend unter mechanische Spannung, also unter Stress gestellt wird, wird angestrebt, gewisse Mindestradien R nicht zu unterschreiten, um eine übermäßige Beanspruchung der Dichtung 5 zu vermeiden.

Auch bei der Ausgestaltung der Dichtung 5 sind einige geschickte Anordnungen vorgesehen, die insbesondere mit Hilfe von Fig. 2a und Fig. 2b erläutert werden. Der prinzipielle Aufbau der Dichtung 5 ergibt sich insbesondere aus Fig. 2b. Im Schnitt gesehen bildet sich im Wesentlichen eine H-form der Dichtung 5 aus. Im rechten Bereich ist der Dichtungsfuß 52, im linken Bereich der Dichtungskopf 54 vorgesehen, die durch eine Einschnürung 53 beidseitig jeweils voneinander getrennt sind. Der Aufbau der Dichtung 5 ist im Wesentlichen symmetrisch zu einer Mittelebene 55, die in der als H abstrahierten Dichtungsform dem Mittelsteg entspricht.

Der Dichtungsfuß 52 ist der Bereich, der in die Nut 3.1 eingesetzt beziehungsweise eingedrückt wird, wobei geschickterweise die Breite der Nut etwas geringer ist als die Breite des Dichtungsfußes 52, damit sich eine gewisse Klemmung ergibt und so ein guter Halt der Dichtung 5 in der Nut 3.1.

Die beiden Seiten der symbolisierten H-förmigen Dichtung 5 sind nicht gleichlang. Das bedeutet, die Breite des Dichtungsfußes 52 ist größer wie die Breite des Dichtungskopfes 54, weswegen sich, wie das in Fig. 2a gut zu sehen ist, zwischen dem vorderen Ende des Dichtungskopfes und dem massiven Bereich der Trägerplatte 3 ein Durchgang bildet, der letztendlich mit dem mit Druck beaufschlagbaren Raum 9 in Verbindung steht. Wird nun in dem Raum 9 ein Druck aufgebaut, so gelangt dieser Druck auch über den verbleibenden kleinen Spalt 12'. Der kleine Spalt 12' ertreckt sich dabei von dem Raum 9 ausgehend zwischen der Trägerplatte 3 und dem Gehäuse 2 nach unten in die Nut 3.1. Der im Raum 9 wirkende Druck wirkt über diesen Spalt 12' auf den Dichtungsfuß 52' sowie auf die obere Dichtlippe 56.

Die Nuttiefe der Nut 3.1 ist dabei so bemessen, dass sie etwas kleiner ist wie die Höhe der Dichtung 5, damit die am Dichtungskopf 54 vorgesehenen Dichtlippen 56, 56' etwas aus diesen hervorstehen und sicher den sich bildenden Spalt 12 abdecken und verschließen.

Der obere Teil der Nut 3.1 steht also in kommunizierender Wirkung mit dem mit Druck beaufschlagbaren Raum 9, durch die Einschnürung 53 ist der Fußbereich 52, 52' sowie die im Dichtungskopf vorgesehenen Dichtlippen 56, 56' etwas zueinander flexibel und versuchen dem Druck entsprechend auszuweichen. Dadurch wird der Dichtungsfuß 52' noch weiter in den Nutboden 3.1 hineingedrückt und insbesondere sich eventuell ergebende Spalte oder Durchgänge werden sicher verschlossen.

Gleiches gilt auch für die obere Dichtlippe 56, die durch den Druckaufbau sicher an die seitliche Innenwand 2.3 des Gehäuses 2 gedrückt wird.

Im Übrigen ist der Dichtungsfuß 52 so ausgebildet, dass dieser eine gewisse Elastizität aufweist und auch auszugleichen vermag, weswegen der untere Bereich nicht zwingend gerade sondern gerundet ausgeformt ist und so ein gewisses Rückfederpotential besitzt.

Dicht Dichtlippen 56, 56' sind im Wesentlichen dreieckig an dem Dichtungskopf 54 hervorstehend ausgebildet. Es resultiert damit letztendlich eine Dichtkante an dem vorderen Ende der Dichtlippe 56. Eine doppelte Anordnung der Dichtlippen, es können nach der Erfindung auch mehr als nur zwei Dichtlippen Verwendung finden, bilden eine Art Labyrinthdichtung und verbessern den Abdichtungseffekt.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Anstellvorrichtung für das Bewegen eines Werkzeuges, insbesondere zum Bewegen beziehungsweise Betätigen eines Siegelwerkzeuges in einer Siegelvorrichtung, wobei die Anstellvorrichtung ein einseitig offenes Gehäuse (2) umfasst, das Gehäuse (2) von einer axial verschiebbar gelagerten Trägerplatte (3) komplettierbar ist und das Gehäuse (2) mit der Trägerplatte (3) einen mit Druckmittel beaufschlagbaren Raum (9) definiert und die Trägerplatte (3) das Werkzeug (4) trägt und entweder an der Trägerplatte (3) oder dem Gehäuse (2) eine Dichtung (5) zum Abdichten des Spaltes (12) zwischen Trägerplatte (3) und Gehäuse angeordnet ist.

2. Anstellvorrichtung nach Anspruch 1, **dadurch gekennzeichnet, dass** die Dichtung (5) als Stoßdichtung ausgebildet ist, die durch Ablängen einer Meterdichtware gewonnen wurde.

3. Anstellvorrichtung nach einem oder beiden der vorhergehenden Ansprüche, **dadurch gekennzeichnet, dass** zumindest der Umfang der Trägerplatte (3) und/oder der Umfang des Werkzeuges (4) und dementsprechend das Innere des Gehäuses (2) vorzugsweise die Form eines Rechteckes ausbilden und/oder wenigstens die Eckbereiche der Trägerplatte (3) und die des Gehäuseinneren einen hinreichend großen Radius (R) aufweisen.

4. Anstellvorrichtung nach einem oder mehreren der vorhergehenden Ansprüche, **dadurch gekennzeichnet, dass** das Gehäuse (2) wenigstens eine Öffnung (8) für einen Druckmittelanschluss aufweist und/oder zwischen der Trägerplatte (3) und dem Gehäuse (2) wenigstens ein Rückstellmittel (10) für die Trägerplatte (3) vorgesehen ist.

5. Anstellvorrichtung nach einem oder mehreren der vorhergehenden Ansprüche, **dadurch gekennzeichnet, dass** die Dichtung (5) in einer Nut (3.1) der Trägerplatte (3) oder des Gehäuses (2) angeordnet ist und/oder die Dichtung (5) einen Dichtungsfuß (52) und einen Dichtungskopf (54) besitzt und der Dichtungsfuß (52) in der Nut (3.1) insbesondere klemmend einlegbar ist.

6. Anstellvorrichtung nach einem oder mehreren der vorhergehenden Ansprüche, **dadurch gekennzeichnet, dass** die Dichtung (5) im Schnitt gesehen im Wesentlichen H-förmig ausgebildet ist und/oder der Dichtungskopf (54) mindestens eine Dichtlippe (56, 56') aufweist.

7. Anstellvorrichtung nach einem oder mehreren der vorhergehenden Ansprüche, **dadurch gekennzeichnet, dass** die Dichtung (5) aus Kautschuk-, Gummi-, Moosgummi- oder Silikonmaterial besteht und/oder der Dichtungsfuß (52) breiter ist als der Dichtungskopf (54) und/oder die Dichtung (5) eine größere Breite als Höhe aufweist.

8. Anstellvorrichtung nach einem oder mehreren der vorhergehenden Ansprüche, **gekennzeichnet durch** einen symmetrischen Aufbau der Dichtung (5).

9. Anstellvorrichtung nach einem oder mehreren der vorhergehenden Ansprüche, **dadurch gekennzeichnet, dass** sich die an dem Ende der Stoßdichtung (5) vorgesehenen Stoßflächen (50, 51) der in der Nut (3.1) eingelegten Stoßdichtung (5) berühren und/oder die Stoßflächen (50, 51) parallel zueinander sind und/oder die Stoßflächen (50, 51) im gerade verlaufenden Nutbereich (3.1) angeordnet sind.

10. Werkzeugvorrichtung, insbesondere Siegelvorrichtung zum Versiegeln von Verpackungen mittels einer Verschlussfolie, wobei die Werkzeugvorrichtung ein Werkzeugober- und -unterteil (1, 7) umfasst, **dadurch gekennzeichnet, dass** das Werkzeugoberteil (1) oder das Werkzeugunterteil (7) eine Anstellvorrichtung nach einem oder mehreren der vorhergehenden Ansprüche umfasst.

11. Werkzeugvorrichtung nach Anspruch 10, **dadurch gekennzeichnet, dass** das Werkzeugober- beziehungsweise Werkzeugunterteil das Gehäuse (2) bildet.

12. Werkzeugvorrichtung nach einem oder beiden der vorhergehenden Ansprüche 10 und 11, **dadurch gekennzeichnet, dass** das Werkzeug (4) von einer Siegelplatte gebildet ist.

13. Werkzeugvorrichtung nach einem oder mehreren der vorhergehenden Ansprüche 10 bis 12, **dadurch gekennzeichnet, dass** das Gehäuse (2) U-förmig ausgebildet ist und wobei an dem offenen Ende des Gehäuses (2) zwischen den freien Enden (2.4) der Schenkel (2.1) und dem Werkzeugunterteil (7) des Siegelwerkzeuges die Verschlussfolie (6) geführt ist.

14. Verpackungsmaschine mit einer Werkzeugvorrichtung, insbesondere eine Siegelvorrichtung nach einem oder mehreren der vorhergehenden Ansprüche 10 bis 13.

15. Verwendung einer an ihren Endflächen je eine Stoßfläche aufweisende Stoßdichtung, die durch Ablängen einer Meterdichtware gewonnen wurde, zum Abdichten des Spaltes zwischen einer Trägerplatte und einem Gehäuse, insbesondere in einer Anstellvorrichtung nach einem oder mehreren der vorhergehenden Ansprüche 1 bis 9.
